# EUROPEAN PATENT SPECIFICATION

(11) **EP 2 852 736 B1**
(45) Date of publication and mention of the grant of the patent: **23.08.2017**
(21) Application number: 13793253.9
(22) Date of filing: 20.05.2013
(51) Int. Cl.: F01D 11/00, F01D 5/00, F02C 7/28, F02C 7/00, F01D 5/14

(54) **AIRFOIL MATEFACE SEALING**
STECKSEITENABDICHTUNG BEI EINEM FLÜGEL
ETANCHÉITÉ DE SURFACE D'ACCOUPLEMENT DE PROFIL AÉRODYNAMIQUE

(30) Priority: 22.05.2012 US 201213477765
(43) Date of publication of application: 01.04.2015
(73) Proprietor: United Technologies Corporation, Farmington, CT 06032 (US)
(72) Inventor: AGGARWALA, Andrew, S., Vernon, Connecticut 06066 (US)
(74) Representative: Hull, James Edward
(86) International application number: PCT/US2013/041841
(87) International publication number: WO 2013/177050

(56) References cited:
- EP-A1- 1 840 333
- EP-A2- 1 790 824
- US-A- 6 158 961
- US-A1- 2009 269 184
- US-A1- 2010 124 508
- US-A1- 2010 143 139
- US-B1- 6 261 053
- US-B2- 7 134 842
- US-B2- 7 371 046

## Description

### BACKGROUND

The present invention relates to airfoil mateface sealing, and more particularly to an apparatus and associated method for sealing adjoining matefaces of airfoil platforms.

In gas turbine engines, cascades of airfoils are provided in a primary gas flowpath. These airfoil cascades can include rotatable blades and/or non-rotating stator vanes. Typical blades and stators include an airfoil adjoining a platform at its root or hub end, and possibly also at a shroud at an opposite tip end. Collectively platforms and shrouds can be referred to as endwalls, which define boundaries of the primary gas flowpath. In modern engines these endwalls are often segmented, such that an endwall segment is integrally formed or attached to each airfoil. Adjacent endwall segments in the cascade adjoin each other at matefaces. Matefaces are generally separated by small gaps. In hot (e.g., turbine) sections of a gas turbine engine, airfoil cascades may be cooled with a cooling fluid, a portion of which may flow through the gaps between endwall matefaces and into the primary flowpath.

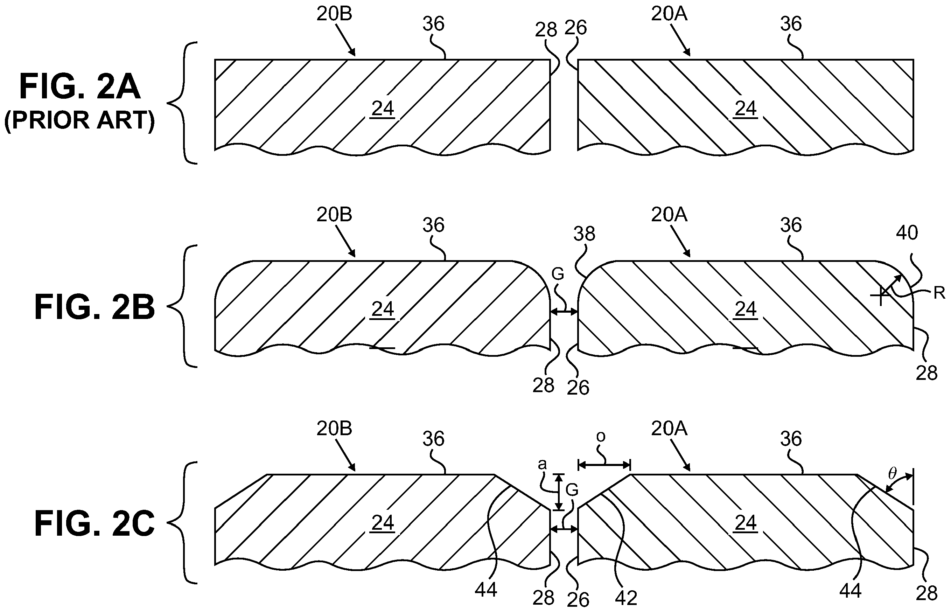

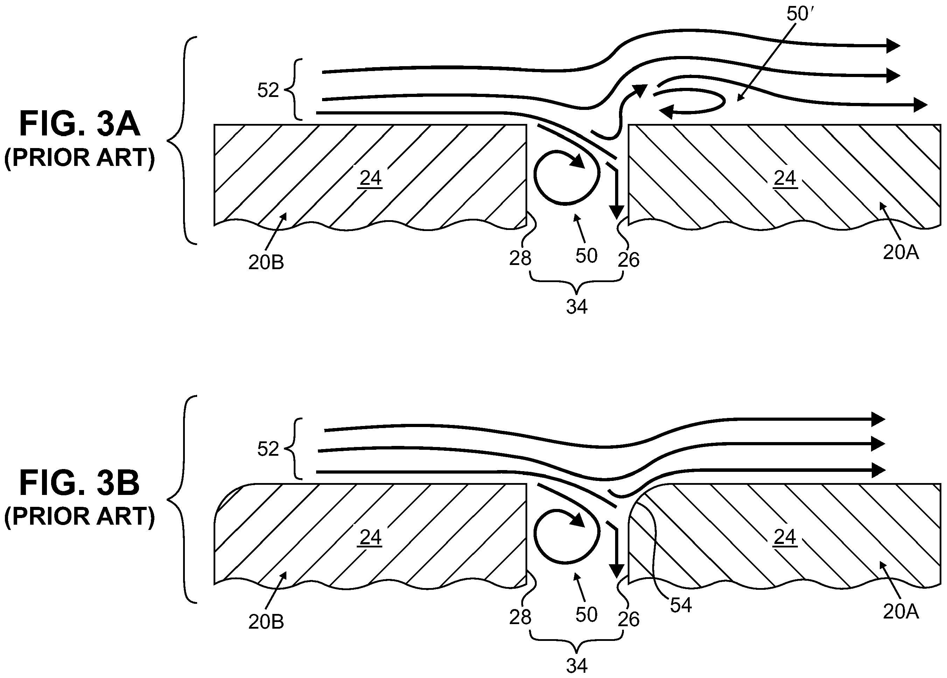

In a basic prior art design, as shown in FIGS. 2A and 3A, endwall matefaces are machined radially with a break edge. Various endwall or platform designs are known to reduce vortices produced in fluid passing through the primary flowpath and other aerodynamic losses, such as that shown in FIG. 3B. Another prior art design with an inclined endwall surface is shown in EP 1 790 824 A.

However, it is desired to provide improved endwall matefaces that further reduce vortices and secondary losses (i.e., pressure losses) in the primary flowpath.

### SUMMARY

An airfoil assembly for use in an airfoil cascade according to the present invention is defined in claim 1.

### BRIEF DESCRIPTION OF THE DRAWINGS

FIG. 1 is a top view of a pair of adjacent airfoils having adjoining endwall matefaces.
FIG. 2A is a cross-sectional view of a prior art endwall mateface configuration.
FIGS. 2B and 2C are cross-sectional views of embodiments of endwall mateface configurations according to the present invention.
FIGS. 3A and 3B are cross-sectional views of prior art endwall mateface configurations and associated airflow patterns.
FIGS. 3C and 3D are cross-sectional views of the endwall mateface configuration of FIGS. 2B and 2C, respectively, and associated airflow patterns.
FIGS. 4A-4D are cross-sectional views of various embodiments of endwall mateface configurations according to the present invention.
FIGS. 5A-5D are cross-sectional views of the various embodiments of endwall mateface configurations of FIGS. 4A-4D, taken at different axial locations than the views shown in FIGS. 4A-4D.

While the above-identified drawing figures set forth embodiments of the invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

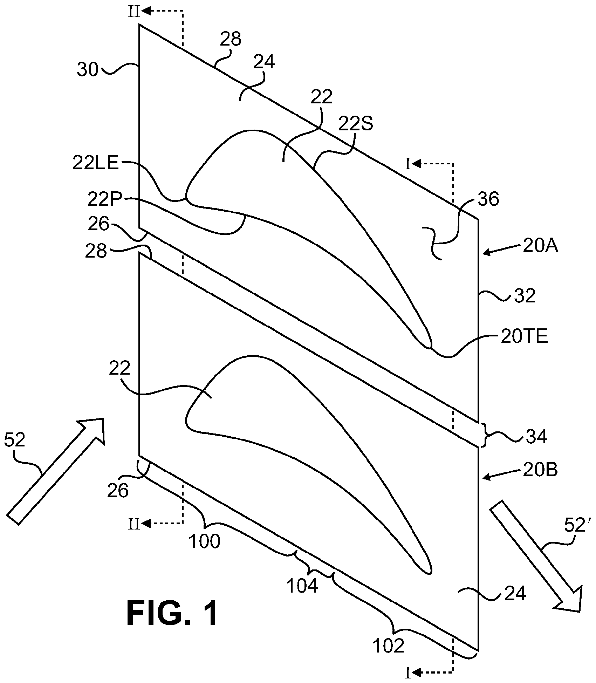

FIG. 1 is a top view of a pair of adjacent airfoils 20A and 20B (generically referred to as simply airfoils 20) each having an airfoil working portion 22 and an endwall 24. The airfoils 20A and 20B can be used in a gas turbine engine (not shown), and can form part of a cascade of similarly-configured airfoils. The working portions 22 each have a pressure side 22P and an opposite suction side 22S defined between a leading edge 22LE and a trailing edge 22TE. In the illustrated embodiment, the airfoil working portion 22 is cambered. The endwalls 24 each have matefaces 26 and 28 along opposing lateral edges, as well as a leading edge 30 and trailing edge 32. The matefaces 26 and 28 and the edges 30 and 32 collectively define a perimeter of each endwall 24. The endwall mateface 26 of the airfoil 20A adjoins the mateface 28 of the airfoil 20B, with a small gap 34 between the adjoining matefaces 26 and 28 of the respective airfoils 20A and 20B. A size of gap 34 can vary for particular applications and can potentially vary during use, such as during different operational conditions. A flowpath surface 36 is defined by the endwalls 24 adjacent to each of the matefaces 26 and 28 and the edges 30 and 32 that extends to the perimeter collectively defined by the matefaces 26 and 28 and the edges 30 and 32, such that the perimeter of the endwalls 24 is also the perimeter of the flowpath surface 36. The flowpath surface 36 can have nearly any desired configuration, such as an axisymmetric or non-axisymmetric contour. Sealing between the adjacent airfoils 20A and 20B is defined at least in part by the matefaces 26 and 28 and the gap 34.

The airfoils 20A and 20B can be positioned in a primary flowpath of a gas turbine engine, with the endwalls 24 defining segments or portions of a boundary of the primary flowpath. In the illustrated embodiment the airfoils 20A and 20B are represented as rotatable turbine blades, but in further embodiments the airfoils 20A and 20B can be turbine stator vanes, or could alternatively be blades or vanes of a compressor section of the engine. The endwalls 24 can be configured as platforms located at or adjoining a root or hub end of the working portions 22 or as shrouds located at or adjoining a tip end of the working portions 22, and the endwalls 24 can be integrally and monolithically formed with the working portions 22, in various embodiments. The basic configuration of gas turbine engines is well known in the art, and therefore further explanation here is unnecessary. The configuration of the working portions 22 and other features of the airfoils 20A and 20B are shown merely by way of example, and not limitation. Those of ordinary skill in the art will recognize that a variety of airfoil configurations are possible for use in conjunction with the present invention.

FIG. 2A is a cross-sectional view of a prior art endwall mateface configuration taken along line I-I of FIG. 1, with the matefaces 26 and 28 both radially oriented along an entire distance from the leading edge 30 to the trailing edge 32 of the endwall 24. The matefaces 26 and 28 each form right angles at respective intersections with the flowpath surfaces 36.

FIGS. 2B and 2C are cross-sectional views of embodiments of configurations of the endwall matefaces 26 and 28, taken along line II-II of FIG. 1 (for simplicity, structures beyond the section plane are not shown in FIGS. 2B and 2C).

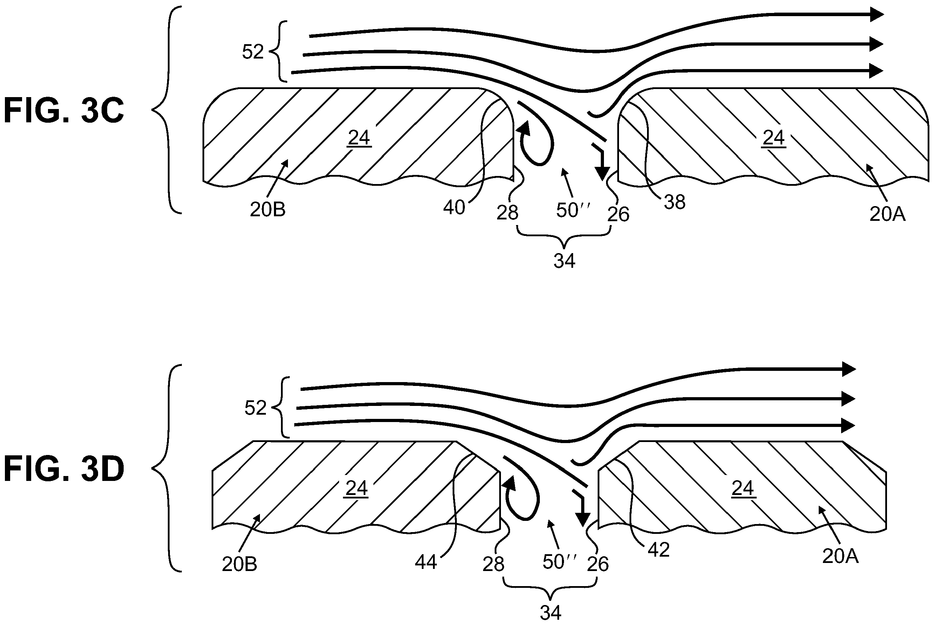

In the embodiment illustrated in FIG. 2B, an arcuate flow modifying edge 38 is formed at a boundary between the mateface 26 and the flowpath surface 36, and an arcuate flow modifying edge 40 is formed at a boundary between the mateface 28 and the flowpath surface 36. The flow modifying edges 38 and 40 can each extend along the entire lengths of the matefaces 26 and 28 between the leading edge 30 and the trailing edge 32 of the endwalls 24 (see also FIG. 3C). Each flow modifying edge 38 and 40 can be generally arcuate with a radius R. In one embodiment, the radius R is approximately 0.127 to 6.35 mm (0.005 to 0.250 inch), or another range significantly or substantially larger than a break edge radius. In another embodiment, the radius R can be established as a function of a size of the gap 34, measured as circumferential distance G, such as with the relationship 0.5 × G ≤ R ≤ 2 × G. In the illustrated embodiment, the flow modifying edges 38 and 40 have a substantially identical configuration (i.e., identical radius R), though in alternative embodiments the configurations of the flow modifying edges 38 and 40 can be different from one another (e.g., having different radiuses R). In still further embodiments, the flow modifying edges 38 and 40 can be defined by other types of curved surfaces (e.g., elliptical, parabolic, complex polynomial, etc.), rather than a simple radius.

In the embodiment illustrated in FIG. 2C, a chamfered flow modifying edge 42 is formed at a boundary between the mateface 26 and the flowpath surface 36, and a chamfered flow modifying edge 44 is formed at a boundary between the mateface 28 and the flowpath surface 36. The flow modifying edges 42 and 44 can each extend along the entire lengths of the matefaces 26 and 28 between the leading edge 30 and the trailing edge 32 of the endwalls 24. Each chamfered edge 42 and 44 can be oriented at an angle θ with respect to the respective adjoining matefaces 26 and 28. In one embodiment, the angle θ is approximately 45° to 75° . In another embodiment, the angle θ can be established as a function of a size of the gap 34, measured as the circumferential distance G, such as θ = a × tan (o/a), where a is a radial dimension of the chamfered edges 42 and 44 and o is a circumferential dimension of the chamfered edges 42 and 44. In one embodiment, the relationships 0.5 × G ≤ o ≤ 2 × G and 0.5 × G ≤ a ≤ 2 xG can be established. Further, o can be generally greater than a.

By having the flow modifying edges 38, 40, 42 and 44 extend along entire lengths of the corresponding matefaces 26 and 28, from the leading edge 30 to the trailing edge 32, manufacturing can be simplified as compared to flow modifying structures that extend only partially along the mateface 26 or 28. Flow modifying benefits are also obtained by having the flow modifying edges 38, 40, 42 and 44 extend along entire lengths of the corresponding matefaces 26 and 28, from the leading edge 30 to the trailing edge 32.

In further embodiments, different flow modifying edge configurations can be utilized for different edges of a single endwall 24. For instance, a chamfered flow modifying edge 42 can be used adjacent to the mateface 26 and an arcuate flow modifying edge 40 can be used adjacent to the mateface 28 for a given endwall 24, or vice-versa.

Although not shown in FIGS. 2B and 2C, it should be understood that additional features can be included with the illustrated endwalls 24 in further embodiments. For example, feather seals, ladder seals or other sealing structures can be used to help seal the gap 34, and damping structures can be positioned at or near the endwalls 24. Additionally, cooling holes can be provided in the platforms 24, such as in any of the matefaces 26 and/or 28, and/or in any of the flow modifying edges 38, 40, 42 and/or 44.

FIGS. 3A and 3B are cross-sectional views of prior art endwall mateface configurations and associated airflow patterns, taken along line II-II of FIG. 1. FIG. 3A illustrates airflow for the configuration shown in FIG. 2A. As shown in FIG. 3A, relatively large vortices 50 and 50' are formed as the fluid flow 52 of the primary flowpath passes the gap 34. The vortices 50 and 50' produce secondary losses, specifically pressure loses, that undesirably reduce efficiency. FIG. 3B illustrates another prior art endwall configuration, which has a rounded edge 54 at the mateface 26 that is downstream relative to the fluid flow 52 but a right angle edge along the upstream mateface 28. The rounded edge 54 extends along only a portion of the mateface 26, and does not extend an entire length between a leading edge 30 and trailing edge 32 of the endwall 24. As the fluid flow 52 passes the gap 34, relatively large vortices 50 are still formed in the gap 34, though a reduction or elimination of the vortices 50' has been achieved.

FIGS. 3C and 3D are a cross-sectional views of endwall mateface embodiments of FIGS. 2B and 2C, respectively, and associated airflow patterns. The cross-sections of FIGS. 3C and 3D are taken along line II-II of FIG. 1. As shown in FIG. 3C, a size and magnitude of vortices 50 at the gap can be achieved in comparison to the prior art configurations shown in FIGS. 3A and 3B, reducing in reduced secondary pressure and mixing losses and produce less turbulent flow that exhibits relatively little flow separation. The airflow 52 closely follows or hugs the endwall 24 as a result of both the upstream flow modifying edge 40 or 44 and the downstream flow modifying edge 38 or 42. In addition, as shown in FIGS. 3C and 3D, the vortices 50' can be reduced or eliminated as compared to FIG. 3A. It should be noted that reference to "upstream" and downstream" refer to the illustrated embodiment, as best shown in FIG. 1, in which the fluid flow 52 of the primary flowpath approaches the gap 34 at a generally transverse angle at or near the section line II-II. Particular flow characteristics will vary for particular applications, based on the configurations of the airfoils 20A and 20B and fluid flow characteristics upstream from the airfoils 20A and 20B.

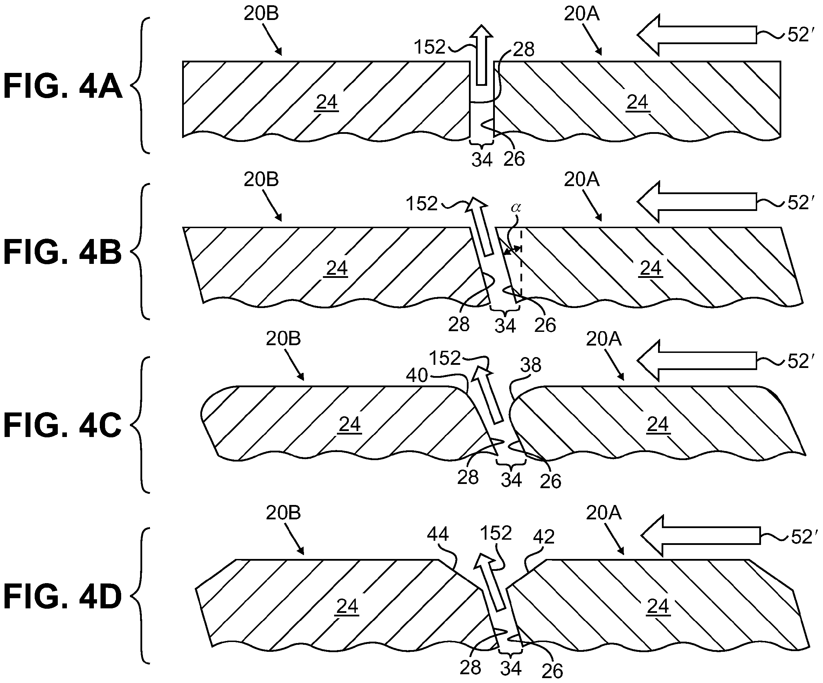

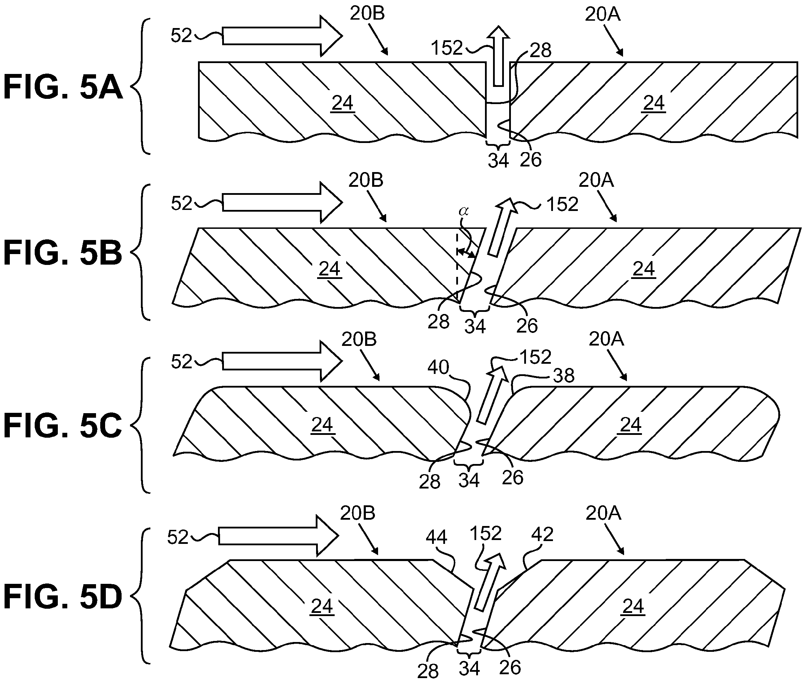

In further embodiments, an interface of the matefaces 26 and 28 of adjacent endwalls 24 at the gap 34 can have different angular orientations relative to the radial direction, as shown in the embodiments illustrated in FIGS. 4A-5D. More specifically, the matefaces 26 and 28 can each be oriented at an angle α relative to the radial direction (see FIGS. 4B and 5B). The angle α can be the same for both adjoining matefaces 26 and 28 in one embodiment, such that the adjoining matefaces 26 and 28 can be parallel. The angle α can be constant along the matefaces 26 and 28 from the leading edge 30 to the trailing edge 32 of the endwalls 24. Alternatively, the angle α can vary along a length of the matefaces 26 and 28 between the leading edge 30 and the trailing edge 32. Variation in the angle α can be implemented in zones. For example, a forward zone 100 that extends to the leading edge 30, an aft zone 102 that extends to the trailing edge 32, and a middle zone 104 located between the forward and aft zones 100 and 102 can be defined. In the forward zone 100 the angle α can be constant at a value α_{II}, in the aft zone 102 the angle α can be constant at a value α_{I}, and in the middle zone 104 a transition in the angle α can be made between the angles α_{I} and α_{II}, that is, the angle α can vary between the angles α_{I} and α_{I} such that a relatively smooth transition is provided at boundaries between the middle zone 104 and each of the forward and aft zones 100 and 102.

In some embodiments, at least portions of the matefaces 26 and 28 can be substantially planar. For example, the forward zones 100 and aft zones 102 of the matefaces 26 and 28 can be substantially planar, while the middle zone 104 would generally be non-planar to accomplish the variation in the angle α. In alternatively embodiment, curved or non-linear endwalls 24 can be used, such that the matefaces 26 and 28 have significant non-planar regions.

FIGS. 4A-4D are cross-sectional views of various additional embodiments of endwall mateface configurations taken along line I-I of FIG. 1. As shown in the embodiment illustrated in FIG. 4A, the angle α of the matefaces 26 and 28 is 0° and no flow modifying edge is present between the matefaces 26 and 28 and the flowpath surface 36 of the endwalls 24. A secondary flow 152 is shown passing through the gap 34 toward a fluid flow 52' of the primary flowpath. Here it should be noted that as illustrated in FIG. 1, the fluid flow 52 that enters a throat area between the adjacent airfoils 20A and 20B changes direction (i.e., turns) relative to an axial direction to form the exiting fluid flow 52'. The secondary flow 152 can be a cooling air flow that mixes with the fluid flow 52 and 52' of the primary flowpath. As shown in the embodiment illustrated in FIG. 4B, the matefaces 26 and 28 are arranged at a non-zero angle α relative to the radial direction (where the angle α is positive in a clockwise direction when looking forward, that is, to the right in FIGS. 4A-4D), such that the secondary flow 152 is at least partially angled from the radial direction in generally the same direction as the fluid flow 52'. No flow modifying edge is present between the matefaces 26 and 28 and the flowpath surface 36 of the endwalls 24 as shown in FIG. 4B. As shown in FIG. 4C, arcuate flow modifying edges 38 and 40 are present between the matefaces 26 and 28 and the flowpath surface 36 of the endwalls 24, and the matefaces 26 and 28 are arranged at a non-zero angle α relative to the radial direction, such that the secondary flow 152 is at least partially angled from the radial direction in generally the same direction as the fluid flow 52'. As shown in FIG. 4D, chamfered flow modifying edges 42 and 44 are present between the matefaces 26 and 28 and the flowpath surface 36 of the endwalls 24, and the matefaces 26 and 28 are arranged at a non-zero angle α relative to the radial direction, such that the secondary flow 152 is at least partially angled from the radial direction in generally the same direction as the fluid flow 52'.

FIGS. 5A-5D are cross-sectional views of the various embodiments of endwall mateface configurations, taken along line II-II of FIG. 1. As shown in the embodiment illustrated in FIG. 5A, the angle α of the matefaces 26 and 28 is 0° and no flow modifying edge is present between the matefaces 26 and 28 and the flowpath surface 36 of the endwalls 24. A secondary flow 152 is shown passing through the gap 34 toward a fluid flow 52' of the primary flowpath. As shown in the embodiment illustrated in FIG. 5B, the matefaces 26 and 28 are arranged at a non-zero angle α relative to the radial direction, such that the secondary flow 152 is at least partially angled from the radial direction in generally the same direction as the fluid flow 52. No flow modifying edge is present between the matefaces 26 and 28 and the flowpath surface 36 of the endwalls 24 as shown in FIG. 5B. As shown in FIG. 5C, arcuate flow modifying edges 38 and 40 are present between the matefaces 26 and 28 and the flowpath surface 36 of the endwalls 24, and the matefaces 26 and 28 are arranged at a non-zero angle α relative to the radial direction, such that the secondary flow 152 is at least partially angled from the radial direction in generally the same direction as the fluid flow 52. As shown in FIG. 5D, chamfered flow modifying edges 42 and 44 are present between the matefaces 26 and 28 and the flowpath surface 36 of the endwalls 24, and the matefaces 26 and 28 are arranged at a non-zero angle α relative to the radial direction, such that the secondary flow 152 is at least partially angled from the radial direction in generally the same direction as the fluid flow 52.

In one embodiment, an absolute value of the angle α can be in the range of approximately 0°≤ |α| ≤ 45°. In a further embodiment, the angle α₁ in the forward zone 100 can be in the range of approximately 0°≤ α_{II} ≤ 45°, and the angle α₂ in the aft zone 102 can be in the range of approximately -45° ≤ α_{I} ≤ 0° (where α_{I} ≠ α_{II}). In still a further embodiment, the angle α_{II} in the forward zone 100 can be in the range of approximately - 45° ≤ α_{II} ≤ 0°, and the angle α_{I} in the aft zone 102 can be in the range of approximately 0°≤ α_{I} ≤ 45° (where α_{I} ≠ α_{II}). In one embodiment, the angle α_{II} in the forward zone 100 can be approximately 0° and the angle α_{I} in the aft zone 102 can be in the range of approximately 0°< α_{I} ≤ 45°. In an alternative embodiment, the angle α_{II} in the forward zone 100 can be in the range of approximately -45° ≤ α_{II} < 0° and the angle α_{I} in the aft zone 102 can be approximately 0°. It is possible to incorporate the flow modifying edges 38, 40, 42 and/or 44 into embodiments of the endwalls 24 having any angle or angles α.

It may be desirable for simplification of assembly of the airfoils 20A and 20B into a corresponding mounting structure, such as a rotor disk or case (not shown) having one or more airfoil retention slots of a conventional configuration, to have the angle α of the matefaces 26 and 28 in the forward or aft zone 100 or 102 to be 0° or close to 0°. For example, in one embodiment, the matefaces 26 and 28 can have the angle α be zero or near-zero in the forward zone 100. In an alternative embodiment, the matefaces 26 and 28 can have the angle α be zero or near-zero in the aft zone 102.

Although not shown in FIGS. 4A-5D, it should be understood that additional features can be included with the illustrated endwalls 24 in further embodiments. For example, feather seals, ladder seals or other sealing structures can be used to help seal the gap 34, and damping structures can be positioned at or near the endwalls 24. Additionally, cooling holes can be provided in the platforms 24, such as in any of the matefaces 26 and/or 28, and/or in any of the flow modifying edges 38, 40, 42 and/or 44.

Any relative terms or terms of degree used herein, such as "substantially", "essentially", "generally" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal or rotational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An airfoil assembly (20A, 20B) for use in an airfoil cascade, the airfoil assembly (20A, 20B) comprising:
a first airfoil (20A); and
a second airfoil (20B), wherein each of the first and second airfoils (20A,20B) comprises:
an airfoil working portion (22);
an endwall (24) adjoining an end of the airfoil working portion (22), the endwall (24) having a leading edge (30), a trailing edge (32), a first mateface (26), and a second mateface (28), wherein the first and second matefaces (26, 28) are arranged opposite one another, and the leading edge (30), trailing edge (32), and first and second matefaces (26, 28) collectively define a perimeter of the endwall (24);
a forward zone (100) defined by the endwall (24) that extends to the leading edge (30), wherein the first and second matefaces (26, 28) are each oriented at an angle α_{II} relative to a radial direction in the forward zone (100);
an aft zone (102) defined by the endwall (24) that extends to the trailing edge (32), wherein the first and second matefaces (26, 28) are each oriented at an angle α_{I} relative to a radial direction in the aft zone (102), and wherein the angles α_{I} and α_{II} are not equal; and
a middle zone (104) defined by the endwall (24) in between the forward and aft zones (100, 102), wherein the first and second matefaces (26, 28) transition between the angle α_{II} and the angle α_{I} in the middle zone (104);
wherein the first and second airfoils (20A, 20B) are arranged such that the first mateface (26) of the first airfoil (20A) adjoins the second mateface (28) of the second airfoil (20B) with a gap (34) between the adjoining matefaces (26, 28).

2. The airfoil assembly of claim 1, wherein the endwall (24) is integrally and monolithically formed with the airfoil working portion (22).

3. The airfoil assembly of claim 1 or 2, wherein the angle α_{II} is in the range of approximately 0°≤ α_{II} ≤ 45°, and wherein the angle α_{I} is in the range of approximately - 45° ≤ α_{I} ≤ 0°.

4. The airfoil assembly of claim 1 or 2, wherein the angle α_{II} is in the range of approximately -45° ≤ α_{II} ≤0°, and wherein the angle α_{I} is in the range of approximately 0°≤ α_{I} ≤ 45°.

5. The airfoil assembly of claim 1 or 2, wherein the angle α_{II} is approximately 0°, and wherein the angle α_{I} is in the range of approximately 0°< α_{I} ≤ 45°.

6. The airfoil assembly of claim 1 or 2, wherein the angle α_{II} is in the range of approximately -45° ≤ α_{II} < 0°, and wherein the angle α_{I} is approximately 0°.

7. The airfoil assembly of any preceding claim, further comprising:
a flowpath surface (36) adjacent to each of the first and second matefaces (26, 28) and the leading and trailing edges (30, 32), and that extends to the perimeter of the endwall (24);
a first flow modifying edge (38; 42) between the first mateface (26) and the flowpath surface (36), wherein the first flow modifying edge (38; 42) extends along an entire length of the first mateface (26) between the leading edge (30) and the trailing edge (32); and
a second flow modifying edge (40; 44) between the second mateface (28) and the flowpath surface (36), wherein the second flow modifying edge (38; 42) extends along an entire length of the second mateface (28) between the leading edge (30) and the trailing edge (32).

8. The airfoil assembly of claim 7, wherein the first flow modifying edge (38; 42) comprises an arcuate flow modifying edge (38) with a radius R, wherein the radius R is established as a function of a size of the gap (34), measured as circumferential distance G with the relationship 0.5 × G ≤ R ≤ 2 × G.

9. The airfoil assembly of claim 8, wherein the radius R is in a range of approximately 0.127 to 6.35 mm (0.005 to 0.250 inch).

10. The airfoil assembly of claim 7, 8 or 9, wherein the second flow modifying edge (40; 44) comprises an arcuate flow modifying edge (40) configured substantially identically to the first flow modifying edge (38; 42).

11. The airfoil assembly of any of claims 7 to 10, wherein the first flow modifying edge (38; 42) comprises a chamfered flow modifying edge (42) which is defined at an angle θ with respect to the adjoining first mateface (26), wherein the angle θ is established as a function of a size of the gap (34), measured as the circumferential distance G, such as 0 = a × tan (o/a), where a is a radial dimension of the chamfered flow modifying edge (42) and o is a circumferential dimension of the chamfered flow modifying edge (42) and the relationship 0.5 × G ≤ o ≤ 2 × G and 0.5 × G ≤ a ≤ 2 × G is established.

12. The airfoil assembly of claim 11, wherein the angle θ is in the range of approximately 45° to 75°.

13. A method comprising:
providing a first endwall (24) adjoining an end of an airfoil working portion (22) of a first airfoil (20A) and a second endwall (24) adjoining an end of an airfoil working portion (22) of a second airfoil (20B), the first and second endwalls (24) each having a leading edge (30), a trailing edge (32), a first mateface (26), a second mateface (28), and a flowpath surface (36), wherein the first and second matefaces (26, 28) are arranged opposite one another, wherein the leading edge (30), trailing edge (32), and first and second matefaces (26, 28) collectively define a perimeter of the endwall (24), and wherein the flowpath surface (36) is adjacent to each of the first and second matefaces (26, 28) and the leading and trailing edges (30, 32), and wherein the first and second airfoils (20A, 20B) are arranged such that the first mateface (26) of the first airfoil (20A) adjoins the second mateface (28) of the second airfoil (20B) with a gap (34) between the adjoining matefaces (26, 28);
defining the first and second matefaces (26, 28) at an angle α_{II} relative to a radial direction in a forward zone (100) of the endwall (24) that extends to the leading edge (30);
defining the first and second matefaces (26, 28) at an angle α_{I} relative to the radial direction in an aft zone (102) of the endwall (24) that extends to the trailing edge (32), and wherein the angles α_{I} and α_{II} are not equal; and
defining a middle zone (104) of the endwall (24) in between the forward and aft zones (100, 102), wherein the first and second matefaces (26, 28) transition between the angle α_{I} and the angle α_{II} in the middle zone (104);
defining a first flow modifying edge (38; 42) between the first mateface (26) and the flowpath surface (36) along an entire length of the first mateface (26) between the leading edge (30) and the trailing edge (32); and
defining a second flow modifying edge (40; 44) between the second mateface (28) and the flowpath surface (36) along an entire length of the second mateface (28) between the leading edge (30) and the trailing edge (32).

14. The method of claim 13, wherein the steps of defining a first and second flow modifying edge (38, 40; 42, 44) comprises one of:
forming a chamfer (40, 44); or
forming an arcuate edge (38, 40) at a radius R, wherein the radius R is in a range of approximately 0.127 to 6.35 mm (0.005 to 0.250 inch).

15. The method of claim 13 or 14, wherein the steps of defining a first and second flow modifying edge (38, 40; 42, 44) comprises one of:
forming a chamfer (42, 44) at an angle θ with respect to the first and second matefaces (26, 28), wherein the angle θ is established as a function of a size of the gap (34), measured as the circumferential distance G, such as θ = a × tan (o/a), where a is a radial dimension of the chamfered flow modifying edge (42) and o is a circumferential dimension of the chamfered flow modifying edge (42); or
forming an arcuate edge (38, 40) with a radius R, wherein the radius R is established as a function of a size of the gap (34), measured as circumferential distance G with the relationship 0.5 × G ≤ R ≤ 2 × G.

## Patentansprüche

1. Flügelanordnung (20A, 20B) zur Verwendung in einer Flügelkaskade, wobei die Flügelanordnung (20A, 20B) Folgendes umfasst:
einen ersten Flügel (20A); und
einen zweiten Flügel (20B), wobei jeder von dem ersten und zweiten Flügel (20A, 20B) Folgendes umfasst:
einen Flügelarbeitsabschnitt (22);
eine zu einem Ende des Flügelarbeitsabschnitts (22) benachbarte Stirnwand (24), wobei die Stirnwand (24) eine Vorderkante (30), eine Hinterkante (32), eine erste Steckseite (26) und eine zweite Steckseite (28) aufweist, wobei die erste und zweite Steckseite (26, 28) einander gegenüberliegend angeordnet sind und die Vorderkante (30), Hinterkante (32) und erste und zweite Steckseite (26, 28) zusammen einen Umfang der Stirnwand (24) definieren;
einen durch die Stirnwand (24) definierten vorderen Bereich (100), der sich zu der Vorderkante (30) erstreckt, wobei die erste und zweite Steckseite (26, 28) jeweils in einem Winkel α_{II} bezogen auf eine radiale Richtung in dem vorderen Bereich (100) ausgerichtet sind;
einen durch die Stirnwand (24) definierten hinteren Bereich (102), der sich zu der Hinterkante (32) erstreckt, wobei die erste und zweite Steckseite (26, 28) jeweils in einem Winkel α_{I} bezogen auf eine radiale Richtung in dem hinteren Bereich (102) ausgerichtet sind und wobei die Winkel α_{II} und α_{I} nicht gleich sind; und
einen durch die Stirnwand (24) definierten mittleren Bereich (104) zwischen dem vorderen und hinteren Bereich (100, 102), wobei die erste und zweite Steckseite (26, 28) zwischen dem Winkel α_{II} und dem Winkel α_{I} in dem mittleren Bereich (104) ineinander übergehen;
wobei der erste und zweite Flügel (20A, 20B) derart angeordnet sind, dass die erste Steckseite (26) des ersten Flügels (20A) zu der zweiten Steckseite (28) des zweiten Flügels (20B) benachbart ist, mit einem Spalt (34) zwischen den benachbarten Steckseiten (26, 28).

2. Flügelanordnung nach Anspruch 1, wobei die Stirnwand (24) integral und monolithisch mit dem Flügelarbeitsabschnitt (22) ausgebildet ist.

3. Flügelanordnung nach Anspruch 1 oder 2, wobei der Winkel α_{II} in dem Bereich von etwa 0° ≤ α_{II} ≤ 45° liegt und wobei der Winkel α_{I} in dem Bereich von etwa -45° ≤ α_{I} ≤0° liegt.

4. Flügelanordnung nach Anspruch 1 oder 2, wobei der Winkel α_{II} in dem Bereich von etwa -45° ≤ α_{II} ≤ 0° liegt und wobei der Winkel α_{I} in dem Bereich von etwa 0° ≤ α_{I} ≤45° liegt.

5. Flügelanordnung nach Anspruch 1 oder 2, wobei der Winkel α_{II} etwa 0° ist und wobei der Winkel α_{I} in dem Bereich von etwa 0° ≤ α_{I} ≤45° liegt.

6. Flügelanordnung nach Anspruch 1 oder 2, wobei der Winkel α_{II} in dem Bereich von etwa -45° ≤ α_{II} ≤ 0° liegt und wobei der Winkel α_{I} etwa 0° ist.

7. Flügelanordnung nach einem der vorhergehenden Ansprüche, ferner umfassend:
eine Strömungspfadoberfläche (36) benachbart zu jedem von der ersten und zweiten Steckseite (26, 28) und der Vorder- und Hinterkante (30, 32) und die sich zu dem Umfang der Stirnwand (24) erstreckt;
eine erste strömungsmodifizierende Kante (38; 42) zwischen der ersten Steckseite (26) und der Strömungspfadoberfläche (36), wobei sich die erste strömungsmodifizierende Kante (38; 42) entlang einer gesamten Länge der ersten Steckseite (26) zwischen der Vorderkante (30) und der Hinterkante (32) erstreckt; und
eine zweite strömungsmodifizierende Kante (40; 44) zwischen der zweiten Steckseite (28) und der Strömungspfadoberfläche (36), wobei sich die zweite strömungsmodifizierende Kante (38; 42) entlang einer gesamten Länge der zweiten Steckseite (28) zwischen der Vorderkante (30) und der Hinterkante (32) erstreckt.

8. Flügelanordnung nach Anspruch 7, wobei die erste strömungsmodifizierende Kante (38; 42) eine bogenförmige strömungsmodifizierende Kante (38) mit einem Radius R umfasst, wobei der Radius R als eine Funktion einer Größe des Spalts (34) festgelegt ist, der als ein Umfangsabstand G mit der Beziehung
0,5 x G ≤ R ≤ 2 x G gemessen ist.

9. Flügelanordnung nach Anspruch 8, wobei der Radius R in einem Bereich von etwa 0,127 bis 6,35 mm (0,005 bis 0,250 Zoll) liegt.

10. Flügelanordnung nach Anspruch 7, 8 oder 9, wobei die zweite strömungsmodifizierende Kante (40; 44) eine bogenförmige strömungsmodifizierende Kante (40) umfasst, die im Wesentlichen identisch zu der ersten strömungsmodifizierenden Kante (38; 42) konfiguriert ist.

11. Flügelanordnung nach einem der Ansprüche 7 bis 10, wobei die erste strömungsmodifizierende Kante (38; 42) eine abgeschrägte strömungsmodifizierende Kante (42) umfasst, die in einem Winkel θ in Bezug auf die benachbarte erste Steckseite (26) definiert ist, wobei der Winkel θ als eine Funktion einer Größe des Spalts (34) festgelegt ist, der als eine Umfangsentfernung G gemessen ist, wie etwa θ = a x tan(o/a), wobei a eine radiale Abmessung der abgeschrägten strömungsmodifizierenden Kante (42) ist und o eine Umfangsabmessung der abgeschrägten strömungsmodifizierten Kante (42) ist und die Beziehung 0,5 x G ≤ o ≤ 2 x G und 0,5 x G ≤ a ≤ 2 x G festgelegt ist.

12. Flügelanordnung nach Anspruch 11, wobei der Winkel θ in dem Bereich von etwa 45° bis 75° liegt.

13. Verfahren, umfassend:
Bereitstellen einer ersten Stirnwand (24), die zu einem Ende eines Flügelarbeitsabschnitts (22) eines ersten Flügels (20A) benachbart ist, und einer zweiten Stirnwand (24), die zu einem Ende eines Flügelarbeitsabschnitts (22) eines zweiten Flügels (20B) benachbart ist, wobei die erste und zweite Stirnwand (24) jeweils eine Vorderkante (30), eine Hinterkante (32), eine erste Steckseite (26), eine zweite Steckseite (28) und eine Strömungspfadoberfläche (36) aufweist, wobei die erste und zweite Steckseite (26, 28) einander gegenüberliegend angeordnet sind, wobei die Vorderkante (30), Hinterkante (32) und erste und zweite Steckseite (26, 18) zusammen einen Umfang der Stirnwand (24) definierten und wobei die Strömungspfadoberfläche (36) benachbart zu jedem von der ersten und zweiten Steckseite (26, 28) und der Vorder- und Hinterkante (30, 32) ist und wobei der erste und zweite Flügel (20A, 20B) derart angeordnet sind, dass die erste Steckseite (26) des ersten Flügels (20A) benachbart zu der zweiten Steckseite (28) des zweiten Flügels (20B) ist, mit einem Spalt (34) zwischen den benachbarten Steckseiten (26, 28);
Definieren der ersten und zweiten Steckseite (26, 28) in einem Winkel α_{II} bezogen auf eine radiale Richtung in einem vorderen Bereich (100) der Stirnwand (24), der sich zu der Vorderkante (30) erstreckt;
Definieren der ersten und zweiten Steckseite (26, 28) in einem Winkel α_{I} bezogen auf die radiale Richtung in einem hinteren Bereich (102) der Stirnwand (24), der sich zu der Hinterkante (32) erstreckt, und wobei die Winkel α_{I} und α_{II} nicht gleich sind; und
Definieren eines mittleren Bereichs (104) der Stirnwand (24) zwischen dem vorderen und hinteren Bereich (100, 102), wobei die erste und zweite Steckseite (26, 28) zwischen dem Winkel α_{I} und dem Winkel α_{II} in dem mittleren Bereich (104) ineinander übergehen;
Definieren einer ersten strömungsmodifizierenden Kante (38; 42) zwischen der ersten Steckseite (26) und der Strömungspfadoberfläche (36) entlang einer gesamten Länge der ersten Steckseite (26) zwischen der Vorderkante (30) und der Hinterkante (32); und
Definieren einer zweiten strömungsmodifizierenden Kante (40; 44) zwischen der zweiten Steckseite (28) und der Strömungspfadoberfläche (36) entlang der gesamten Länge der zweiten Steckseite (28) zwischen der Vorderkante (30) und der Hinterkante (32).

14. Verfahren nach Anspruch 13, wobei die Schritte des Definierens einer ersten und zweiten strömungsmodifizierenden Kante (38, 40; 42, 44) eines von Folgendem umfassen:
Bilden einer Abschrägung (40, 44); oder
Bilden einer bogenförmigen Kante (38, 40) mit einem Radius R, wobei der Radius R in einem Bereich von etwa 0,127 bis 6,35 mm (0,005 bis 0,250 Zoll) liegt.

15. Verfahren nach Anspruch 13 oder 14, wobei die Schritte des Definierens einer ersten und zweiten strömungsmodifizierenden Kante (38, 40; 42, 44) eines von Folgendem umfasst:
Bilden einer Abschrägung (42, 44) in einem Winkel θ in Bezug auf die erste und zweite Steckseite (26, 28), wobei der Winkel θ als eine Funktion der Größe des Spalts (34) festgelegt ist, der als die Umfangsentfernung G gemessen ist, wie etwa θ = a x tan(o/a), wobei a eine radiale Abmessung der abgeschrägten strömungsmodifizierten Kante (42) ist und o eine Umfangsabmessung der abgeschrägten strömungsmodifizierten Kante (42) ist; oder
Bilden einer bogenförmigen Kante (38, 40) mit einem Radius R, wobei der Radius R als eine Funktion einer Größe des Spalts (34) festgelegt ist, der als eine Umfangsentfernung G mit der Beziehung 0,5 x G ≤ R ≤ 2 x G gemessen ist.

## Revendications

1. Ensemble de profil aérodynamique (20A, 20B) destiné à être utilisé dans une cascade de profil aérodynamique (20A, 20B) comprenant :
un premier profil aérodynamique (20A) ; et
un second profil aérodynamique (20B), dans lequel chacun des premier et second profils aérodynamiques (20A, 20B) comprend :
une partie de travail de profil aérodynamique (22);
une paroi d'extrémité (24) adjacente à une extrémité de la partie de travail de profil aérodynamique (22), la paroi d'extrémité (24) ayant un bord d'attaque (30), un bord de fuite (32), une première surface d'accouplement (26), et une seconde surface d'accouplement (28), dans lequel les première et seconde surfaces d'accouplement (26, 28) sont agencées opposées l'une à l'autre, et le bord d'attaque (30), le bord de fuite (32), et les première et seconde surfaces d'accouplement (26, 28) définissent collectivement un périmètre de la paroi d'extrémité (24) ;
une zone avant (100) définie par la paroi d'extrémité (24) qui s'étend vers le bord d'attaque (30), dans lequel les première et seconde surfaces d'accouplement (26, 28) sont chacune orientées au niveau d'un angle α_{II} par rapport à une direction radiale dans la zone avant (100) ;
une zone arrière (102) définie par la paroi d'extrémité (24) qui s'étend vers le bord de fuite (32), dans lequel les première et seconde surfaces d'accouplement (26, 28) sont chacune orientées au niveau d'un angle α_{I} par rapport à une direction radiale dans la zone arrière (102), et dans lequel les angles α_{I} et α_{II} ne sont pas égaux ; et
une zone intermédiaire (104) définie par la paroi d'extrémité (24) entre les zones avant et arrière (100, 102), dans lequel les première et seconde surfaces d'accouplement (26, 28) passent entre l'angle α_{II} et l'angle α_{I} dans la zone intermédiaire (104) ;
dans lequel les premier et second profils aérodynamiques (20A, 20B) sont agencés de sorte que la première surface d'accouplement (26) du premier profil aérodynamique (20A) est adjacente à la seconde surface d'accouplement (28) du second profil aérodynamique (20B) avec un espace (34) entre les surfaces d'accouplement adjacentes (26, 28).

2. Ensemble de profil aérodynamique selon la revendication 1, dans lequel la paroi d'extrémité (24) est intégralement et monolithiquement formée avec la partie de travail de profil aérodynamique (22).

3. Ensemble de profil aérodynamique selon la revendication 1 ou 2, dans lequel l'angle α_{II} est dans la plage d'environ 0° ≤ α_{II} ≤ 45°, et dans lequel l'angle α_{I} est dans la plage d'environ -45° ≤ α_{I} ≤ 0°.

4. Ensemble de profil aérodynamique selon la revendication 1 ou 2, dans lequel l'angle α_{II} est dans la plage d'environ -45° ≤ α_{II} ≤ 0°, et dans lequel l'angle α_{I} est dans la plage d'environ 0° ≤ α_{I} ≤ 45°.

5. Ensemble de profil aérodynamique selon la revendication 1 ou 2, dans lequel l'angle α_{II} est d'environ 0°, et dans lequel l'angle α_{I} est dans la plage d'environ 0° ≤ α_{I} ≤ 45°.

6. Ensemble de profil aérodynamique selon la revendication 1 ou 2, dans lequel l'angle α_{II} est dans la plage d'environ -45° ≤ α_{II} ≤ 0°, et dans lequel l'angle α_{I} est d'environ 0°.

7. Ensemble de profil aérodynamique selon une quelconque revendication précédente, comprenant en outre:
une surface de chemin d'écoulement (36) adjacente à chacune des première et seconde surfaces d'accouplement (26, 28) et des bords d'attaque et de fuite (30, 32), et qui s'étend vers le périmètre de la paroi d'extrémité (24) ;
un premier bord de modification d'écoulement (38 ; 42) entre la première surface d'accouplement (26) et la surface de chemin d'écoulement (36), dans lequel le premier bord de modification d'écoulement (38 ; 42) s'étend le long d'une longueur entière de la première surface d'accouplement (26) entre le bord d'attaque (30) et le bord de fuite (32) ; et
un second bord de modification d'écoulement (40 ; 44) entre la seconde surface d'accouplement (28) et la surface de chemin d'écoulement (36), dans lequel le second bord de modification d'écoulement (38 ; 42) s'étend le long d'une longueur entière de la seconde surface d'accouplement (28) entre le bord d'attaque (30) et le bord de fuite (32).

8. Ensemble de profil aérodynamique selon la revendication 7, dans lequel le premier bord de modification d'écoulement (38 ; 42) comprend un bord de modification d'écoulement arrondi (38) avec un rayon R, dans lequel le rayon R est établi en fonction d'une taille de l'espace (34), mesuré comme distance circonférentielle G avec la relation 0,5 x G ≤ R ≤ 2 x G.

9. Ensemble de profil aérodynamique selon la revendication 8, dans lequel le rayon R est dans une plage d'environ 0,127 à 6,35 mm (0,005 à 0,250 pouce).

10. Ensemble de profil aérodynamique selon la revendication 7, 8 ou 9, dans lequel le second bord de modification d'écoulement (40 ; 44) comprend un bord de modification d'écoulement arrondi (40) conçu de manière sensiblement identique au premier bord de modification d'écoulement (38 ; 42).

11. Ensemble de profil aérodynamique selon l'une quelconque des revendications 7 à 10, dans lequel le premier bord de modification d'écoulement (38 ; 42) comprend un bord de modification d'écoulement chanfreiné (42) qui est défini au niveau d'un angle θ par rapport à la première surface d'accouplement adjacente (26), dans lequel l'angle θ est établi en fonction d'une taille de l'espace (34), mesuré comme la distance circonférentielle G, comme θ = a x tan (o/a), où a est une dimension radiale du bord de modification d'écoulement chanfreiné (42) et o est une dimension circonférentielle du bord de modification d'écoulement chanfreiné (42) et la relation 0,5 x G ≤ o ≤ 2 x G et 0,5 x G ≤ a ≤ 2 x G est établie.

12. Ensemble de profil aérodynamique selon la revendication 11, dans lequel l'angle θ est dans la plage d'environ 45° à 75°.

13. Procédé comprenant :
la fourniture d'une première paroi d'extrémité (24) adjacente à une extrémité d'une partie de travail de profil aérodynamique (22) d'un premier profil aérodynamique (20A) et d'une seconde paroi d'extrémité (24) adjacente à une extrémité d'une partie de travail de profil aérodynamique (22) d'un second profil aérodynamique (20B), les première et seconde parois d'extrémité (24) ayant chacune un bord d'attaque (30), un bord de fuite (32), une première surface d'accouplement (26), une seconde surface d'accouplement (28), et une surface de chemin d'écoulement (36), dans lequel les première et seconde surfaces d'accouplement (26, 28) sont agencées opposées l'une à l'autre, dans lequel le bord d'attaque (30), le bord de fuite (32), et les première et seconde surfaces d'accouplement (26, 28) définissent collectivement un périmètre de la paroi d'extrémité (24), et dans lequel la surface de chemin d'écoulement (36) est adjacente à chacune des première et seconde surfaces d'accouplement (26, 28) et des bords d'attaque et de fuite (30, 32), et dans lequel les premier et second profils aérodynamiques (20A, 20B) sont agencés de sorte que la première surface d'accouplement (26) du premier profil aérodynamique (20A) est adjacente à la seconde surface d'accouplement (28) du second profil aérodynamique (20B) avec un espace (34) entre les surfaces d'accouplement adjacentes (26, 28) ;
la définition des première et seconde surfaces d'accouplement (26, 28) au niveau d'un angle α_{I} par rapport à une direction radiale dans une zone avant (100) de la paroi d'extrémité (24) qui s'étend vers le bord d'attaque (30) ;
la définition des première et seconde surfaces d'accouplement (26, 28) au niveau d'un angle α_{I} par rapport à la direction radiale dans une zone arrière (102) de la paroi d'extrémité (24) qui s'étend vers le bord de fuite (32), et dans lequel les angles α_{I} et α_{II} ne sont pas égaux ; et
la définition d'une zone intermédiaire (104) de la paroi d'extrémité (24) entre les zones avant et arrière (100, 102), dans lequel les première et seconde surfaces d'accouplement (26, 28) passent entre l'angle α_{I} et l'angle α_{II} dans la zone intermédiaire (104) ;
la définition d'un premier bord de modification d'écoulement (38 ; 42) entre la première surface d'accouplement (26) et la surface de chemin d'écoulement (36) le long d'une longueur entière de la première surface d'accouplement (26) entre le bord d'attaque (30) et le bord de fuite (32) ; et
la définition d'un second bord de modification d'écoulement (40 ; 44) entre la seconde surface d'accouplement (28) et la surface de chemin d'écoulement (36) le long d'une longueur entière de la seconde surface d'accouplement (28) entre le bord d'attaque (30) et le bord de fuite (32).

14. Procédé selon la revendication 13, dans lequel les étapes de définition d'un premier et d'un second bord de modification d'écoulement (38, 40 ; 42, 44) comprennent l'une parmi:
la formation d'un chanfrein (40, 44) ; ou
la formation d'un bord arrondi (38, 40) à un rayon R, dans lequel le rayon R est dans une plage d'environ 0,127 à 6,35 mm (0,005 à 0,250 pouce).

15. Procédé selon la revendication 13 ou 14, dans lequel les étapes de définition d'un premier et d'un second bord de modification d'écoulement (38, 40 ; 42, 44) comprennent l'une parmi :
la formation d'un chanfrein (42, 44) au niveau d'un angle θ par rapport aux première et seconde surfaces d'accouplement (26, 28), dans lequel l'angle θ est établi en fonction d'une taille de l'espace (34), mesuré comme la distance circonférentielle G, comme θ = a x tan (o/a), où a est une dimension radiale du bord de modification d'écoulement chanfreiné (42) et o est une dimension circonférentielle du bord de modification d'écoulement chanfreiné (42) ; ou
la formation d'un bord arrondi (38, 40) avec un rayon R, dans lequel le rayon R est établi en fonction d'une taille de l'espace (34), mesuré comme distance circonférentielle G avec la relation 0,5 x G ≤ R ≤ 2 x G.
